# EUROPEAN PATENT SPECIFICATION

(11) **EP 4 338 880 B1**
(45) Date of publication and mention of the grant of the patent: **02.07.2025**
(21) Application number: 23192703.9
(22) Date of filing: 22.08.2023
(51) Int. Cl.: B23K 9/167, B23K 9/173, B23K 9/26, B23K 9/29, B23K 9/32

(54) **WELDING OR ADDITIVE MANUFACTURING TORCH WITH SHIELD GAS SCREEN**
SCHWEISS- ODER ADDITIVE FERTIGUNGSBRENNER MIT SCHUTZGASABSCHIRMUNG
TORCHE DE SOUDAGE OU DE FABRICATION ADDITIVE AVEC ÉCRAN DE PROTECTION GAZ

(30) Priority: 23.08.2022 US 202217893336
(43) Date of publication of application: 20.03.2024
(73) Proprietor: Lincoln Global, Inc., Cleveland, OH 44117 (US)
(72) Inventor: CROSS, Charles, Thompson, 44086 (US); OCHSNER, Joe H., Spokane, 99202 (US)
(74) Representative: Hoyng Rokh Monegier B.V.

(56) References cited:
- EP-A2- 3 670 056
- US-A- 3 053 968
- US-A- 4 529 863
- US-A1- 2002 134 760
- US-A1- 2007 056 945

## Description

### BACKGROUND OF THE INVENTION

The present invention relates to torches for gas-shielded arc welding and/or metal additive manufacturing operations, and more particularly to a welding or metal additive manufacturing torch according to the preamble of claim 1 (see for example US 4 529 863 A).

Gas-shielded welding processes, such as gas metal arc welding (GMAW) metal-cored arc welding (MCAW), gas tungsten arc welding (GTAW) and sometimes flux-cored arc welding (FCAW), employ a shielding gas to protect the welding arc and weld puddle from the surrounding air. Specifically, the shielding gas prevents, or shields, the weld zone from atmospheric oxygen, which causes oxidation, and other atmospheric contaminants. A high flow rate of shielding gas will increase the amount of shielding gas discharged during welding. However, a high flow rate of shielding gas can also lead to porosity in the completed weld due to turbulence and the gas flow disrupting the weld pool. A high flow rate of shielding gas also increases the consumption rate of the shielding gas which raises the cost of the welding operation. A more laminar flow of shielding gas during the welding operation, rather than a turbulent flow, would be desirable as it is less disruptive to the weld pool and can allow for lower gas flow rates and less consumption of shielding gas. A more laminar flow of shielding gas also introduces less undesirable reactive gases from the atmosphere into the gas column shielding the weld zone. A more laminar shielding gas flow can also allow for the capability of operating with a longer electrical stickout.

Document US 2007/056945 A1 discloses embodiments of an insulated sleeve and a perforated screen that may be used in a nozzle assembly for a welding torch. In one embodiment, a welding system includes an electrically insulated sleeve and a perforated screen disposed adjacent to the electrically insulated sleeve. The perforated screen is configured to be captured removably between a nozzle and a contact tip of a torch head, and the perforated screen is configured to be installed and removed independent of the nozzle.

Document US 2002/134760 A1 discloses a gas lens assembly for use in a gas shielded welding torch to provide laminar gas flow to the weld puddle. The assembly includes a plurality of annular fine mesh inner filter screens mounted in fixed axially spaced disposition in a gas chamber formed between the lens body and lens sleeve. The filter screens are preferably spaced apart a predetermined distance by a plurality of wave-shaped open mesh spacer discs disposed in a sandwich configuration between the filter screens. A stack of adjacently disposed outer filter screens are mounted in the gas chamber outwardly of the fine mesh filter screens. Each of the outer screens in the stack is individually removable such that the outermost screen can be readily peeled from the stack when damaged by spatter or heat to maintain the laminar gas flow through the assembly and prolong the useful life of the assembly.

Document EP 3 670 056 A2 discloses a welding or additive manufacturing contact tip including an electrically conductive body extending from a proximal end of the body to a distal end of the body. The body forms a first bore terminating at a first exit orifice at a distal end face of the body, and a second bore terminating at a second exit orifice at the distal end face of the body. The first and second exit orifices are separated from each other by a distance configured to facilitate formation of a bridge droplet between a first wire electrode delivered through the first bore and a second wire electrode delivered through the second bore during a deposition operation.

Document US 3 053 968 A discloses a gas-shielded arc torch comprising an elongated electrode, an electrical contact for said electrode, means supporting said contact, said means having an annular chamber and arc shielding gas passages for delivering are shielding gas to such chamber, and a gas lens surrounding said electrode and constituting a wall of such chamber, for fully expanding and directing such gas around said electrode in the direction of the arc end thereof.

### SUMMARY OF THE INVENTION

The following summary presents a simplified summary in order to provide a basic understanding of the present invention.

According to the present invention a welding or metal additive manufacturing torch is defined in claim 1.

Further preferred embodiments of the present invention are defined in the dependent claims.

### BRIEF DESCRIPTION OF THE DRAWINGS

The foregoing and other aspects of the invention will become apparent to those skilled in the art to which the invention relates upon reading the following description with reference to the accompanying drawings, in which:
- FIG. 1: shows a gas-shielded welding system;
- FIG. 2: shows a schematic view of an example welding torch;
- FIG. 3: shows a laminar shielding gas flow through a shielding gas lens in a welding torch;
- FIG. 4: shows the shielding gas lens;
- FIG. 5: is an exploded view of a distal end of a welding torch;
- FIG. 6: shows a schematic view of a welding torch not being part of the present invention;
- FIG. 7: shows a schematic view of an example welding torch; and
- FIG. 8: shows a contact tip and wire electrodes for a dual wire welding operation.

### DETAILED DESCRIPTION OF THE INVENTION

The present invention relates to torches for gas-shielded arc welding and/or metal additive manufacturing operations. The present invention will now be described with reference to the drawings, wherein like reference numerals are used to refer to like elements throughout. It is to be appreciated that the various drawings are not necessarily drawn to scale from one figure to another nor inside a given figure, and in particular that the size of the components are arbitrarily drawn for facilitating the understanding of the drawings. In the following description, for purposes of explanation, numerous specific details are set forth in order to provide a thorough understanding of the present invention.

As used herein, "at least one", "one or more", and "and/or" are open-ended expressions that are both conjunctive and disjunctive in operation. For example, each of the expressions "at least one of A, B and C", "at least one of A, B, or C", "one or more of A, B, and C", "one or more of A, B, or C" and "A, B, and/or C" means A alone, B alone, C alone, A and B together, A and C together, B and C together, or A, B and C together. Any disjunctive word or phrase presenting two or more alternative terms, whether in the description of embodiments, claims, or drawings, should be understood to contemplate the possibilities of including one of the terms, either of the terms, or both terms. For example, the phrase "A or B" should be understood to include the possibilities of "A" or "B" or "A and B."

While embodiments of the present invention described herein are discussed in the context of a gas metal arc welding (GMAW) system, other embodiments of the invention are not limited thereto. For example, embodiments can be utilized in flux-cored arc welding (FCAW), metal-cored arc welding (MCAW), submerged arc welding (SAW) and various GMAW processes such as GMAW-P (pulsed GMAW) and GMAW-S (short circuit GMAW). Further, embodiments of the present invention can be used in manual, semi-automatic and robotic welding operations. Embodiments of the present invention can also be used in metal deposition operations that are similar to welding, such as metal additive manufacturing (3D printing), hardfacing, and cladding. As used herein, the term "welding" is intended to encompass all of these technologies as they all involve material deposition to either join or build up a workpiece. Therefore, in the interests of efficiency, the term "welding" is used below in the description of exemplary embodiments, but is intended to include all of these material deposition operations, whether or not joining of multiple workpieces occurs.

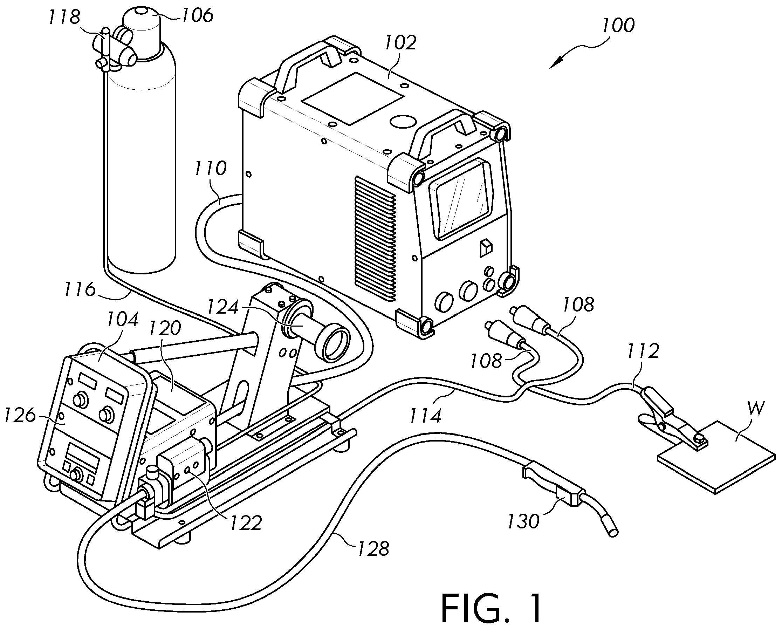

Referring now to the drawings, Fig. 1 shows an example welding system 100. The welding system 100 includes welding power supply 102, a wire feeder 104, and a shielding gas supply 106. Welding power supply 102 includes power cables 108, control cable 110, and power supply cables (not shown). Power cables 108 include a ground wire and clamp 112 connected to a workpiece W, and a power cable 114 for supplying welding waveforms generated by the welding power supply 102 to the wire feeder 104. Control cable 110 may be configured to connect to wire feeder 104 to provide communications between the power supply 102 and the wire feeder. Such communications could also be wireless. It is understood that welding power supply 102, power cables 108, and control cable 110 can have any configuration suitable for supplying power and welding controls within the welding system 100. Although the wire feeder 104 and welding power supply 102 are shown as two separate devices interconnected by cabling, the welding power supply and wire feeder could be integrated into a single welding machine.

Further illustrated in Fig. 1, gas conduit 116 and regulator 118 are configured to connect the shielding gas supply 106 to the wire feeder 104. The shielding gas supply 106 may include inert gases, active gases, or a combination of both, including but not limited to argon, helium, carbon dioxide, argon and helium, argon and hydrogen, and other gas combinations. The gas supply may be any gas or combination of gases configured to shield a weld from the atmosphere.

As shown in Fig. 1, wire feeder 104 may include a housing 120, gear box 122, wire spool assembly 124, and user interface 126. Extending from the gear box 122 is a hose 128 that is configured to connect to a welding torch 130. The housing 120 may be connected to the user interface 126 and gear box 122. Further, the control cable 110 and power cable 114 extending from welding power supply 102, and the gas conduit 116 extending from gas supply 106, are configured to connect to housing 120, gear box 122, and hose 128. Gear box 122 includes at least a drive motor and a plurality of rollers that advance and retract a wire electrode drawn from a spool (not shown) mounted on the spool assembly 124 or drawn from a bulk package, such as a box or drum. Extending between the gear box 122 and the welding torch 130 is the hose 128. The hose 128 provides a conduit for the welding electrode and shielding gas and conducts the welding waveforms to the torch 130. The hose 128 can conduct a trigger signal from the torch 130 to the wire feeder 104 and to the welding power supply 102 to control feeding of the wire electrode and the provision of the welding waveforms and shielding gas to the torch. It is understood that the hose 128 and welding torch 130 may have any configuration suitable for supplying welding wire, shielding gas, and controls between the torch and wire feeder 102. The torch 130 can include a contact tip for conducting the welding waveforms from the wire feeder 104 to the wire electrode, and a shielding gas diffuser and nozzle to direct the shielding gas around the arc and toward the molten puddle. The torch 130 can also include a shielding gas lens to create a more laminar flow of shielding gas around the weld zone and molten puddle. The shielding gas lens is discussed in detail below.

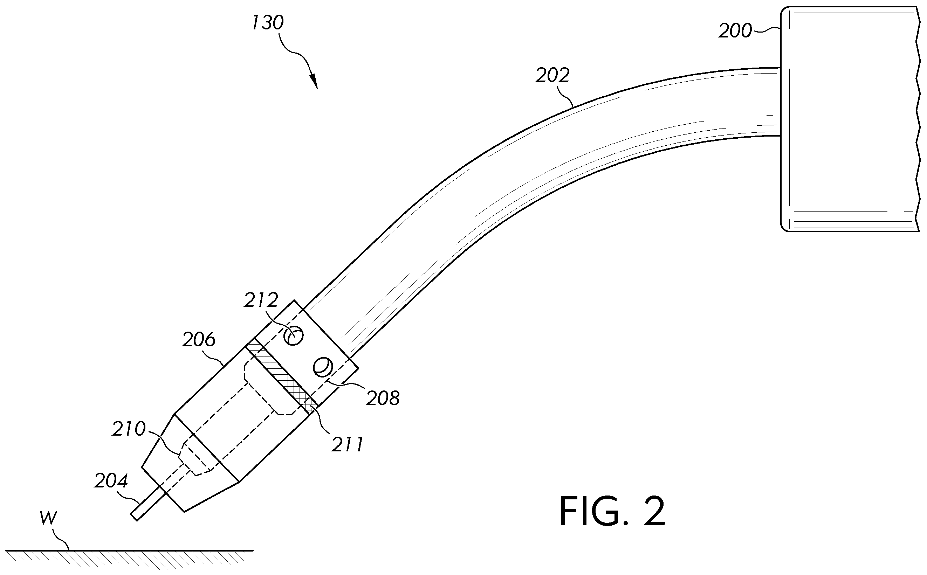

Referring now to Fig. 2, a schematic view of a distal portion of a gas-shielded welding torch 130 is shown in position above workpiece W. The distal end of the torch handle 200 is shown in Fig. 2 along with a gooseneck 202 extending from the torch handle. Welding torch 130 is supplied with one or more wire electrodes 204 (e.g., steel, aluminum, alloys, composites, cored, etc., or other welding wire known to those in the art) from a wire supply spool, drum, etc. by a wire feeder. The wire feeder not only regulates the rate at which welding wire 204 is fed through the torch 130, but it can also control the flow of shielding gas from a gas source to the torch.

The torch 130 includes a nozzle 206. The nozzle 206 directs the flow of shielding gas toward the workpiece W and molten puddle. Within the nozzle 206 are a shielding gas diffuser 208 and a contact tip 210. The contact tip 210 extends from the shielding gas diffuser 208 and is attached to the diffuser, such as via a threaded connection. The contact tip 210 has a through bore and entrance and exit orifices for the wire electrode 204. In certain embodiments, the contact tip 210 can accommodate two or more wire electrodes fed simultaneously during a multi-wire deposition operation, and can have multiple through bores and entrance and exit orifices for the wire electrodes.

A typical example welding operation may utilize a shielding gas flow rate in the range of 30-50 cubic feet per hour (CFH). The shielding gas flow rate is set by the regulator on the shielding gas supply. An operator may increase the shielding gas flow rate for a high deposition welding operation, such as during multi-wire welding, when there is a large weld puddle and weld bead to protect. An operator may also increase the shielding gas flow rate when welding outdoors because wind can blow the shielding gas away from the weld zone. An example high shielding gas flow rate is 80 CFH.

The flow of shielding gas is often turbulent, in particular at high flow rates, which is undesirable. Turbulent shielding gas flows can draw contaminants from the ambient air into the weld zone and can disrupt the weld pool leading to porosity. Turbulent shielding gas flows also reduce the amount of electrical stickout that can be employed during welding. High shielding gas flow rates, which are often turbulent, increase the consumption rate of the shielding gas which raises the cost of the welding operation. A laminar flow of shielding gas from the torch 130 is preferable to a turbulent flow of gas as it allows for lower gas flow rates and reduced porosity while adequately protecting the weld zone. A laminar flow of shielding gas also allows for the use of a longer electrical stickout when the laminar flow is maintained for a longer distance from the nozzle 206 as compared to typical welding operations.

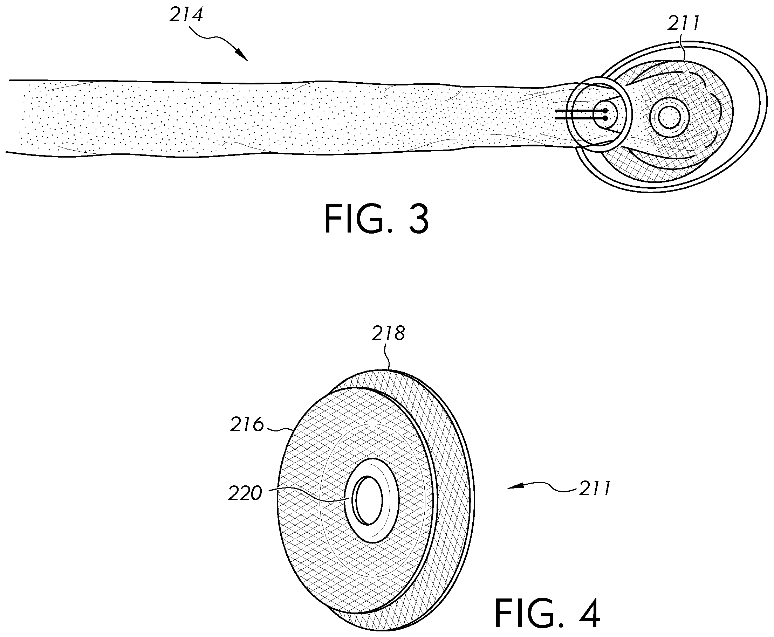

To improve the laminar flow profile of the shielding gas, the torch 130 includes a shielding gas lens 211. The shielding gas lens 211 includes one or more annular screens having a mesh. The diffuser 208 has a plurality of shielding gas discharge holes 212 spaced annularly around the diffuser. The shielding gas lens 211 and its annular screen(s) are located within the nozzle 206 distal of the shielding gas discharge holes 212. The shielding gas flows through the mesh screen(s) of the shielding gas lens 211 after being discharged from the shielding gas discharge holes 212. The shielding gas 214 flowing through the lens 211 is generally laminar as shown schematically in Fig. 3. The screen(s) on the shielding gas lens 211 reduce shielding gas turbulence and provide a long, generally undisturbed laminar flow to the weld puddle. Figure 3 also shows a dual wire welding process in which two wire electrodes are simultaneously fed through the contact tip.

A filtered GMAW nozzle setup as shown can improve the gas coverage during welding by distributing laminar gas flow around the electrodes and onto the weld puddle. The laminar gas flow 214 can help to stabilize the welding arc when using high deposition welding processes such as multi-wire welding. Not only does the weld puddle need shielding, but the arc and droplets that travel through the arc need stable shielding gas coverage, which is provided by a laminar gas flow 214. A laminar gas flow 214 also provides the capability to run lower shielding gas flow rates and conserve shielding gas versus running extremely high flow rates (which may not even be available when using a standard gas regulator rather than a high flow regulator). A more stable delivery of shielding gas flow will correspond with a weld that will yield less porosity and better visual aesthetics.

As shielding gases conforming to the American Welding Society (AWS) A5.32 specification become more accurate at fill plants, welding waveform control technology based on shielding gases becomes more relevant. An example would be distributors that offer gas cylinders with 100% accurate shielding blends. This in turn will correspond with the delivery of the shielding gas at the nozzle of the welding torch. A filtered, stable, generally laminar delivery of shielding gas will deliver a more precise droplet of metal through the arc, especially when using waveform control technology. Aluminum GMAW and critical alloy welding applications that use high shielding gas flow rates or are sensitive to changes or lack of shielding gas coverage could also benefit from the use of a shielding gas lens 211 in the torch.

Figure 4 shows the shielding gas lens 211 in detail. The shielding gas lens 211 has one or more annular screens 216, 218. The annular screens 216, 218 are located within the nozzle distal of the diffuser's shielding gas discharge holes. The annular screens 216, 218 extend radially within the nozzle of the torch, between the diffuser and the nozzle, to filter the shielding gas flow from the diffuser's gas discharge holes. The annular screens 216, 218 have a mesh size suitable to provide a generally laminar flow of shielding gas from the torch at a desired gas flow rate and distance from the end of the nozzle. Although the shielding gas lens 211 shown in Fig. 4 has two annular screens 216, 218, it is to be appreciated that the gas lens could have a single screen or more than two screens if desired.

In an example embodiment, the shielding gas lens 211 can include a central hub 220 that is attached to the annular screens 216, 218. The central hub 220 can be mounted on the diffuser distal of the shielding gas discharge holes, mounted on the contact tip which is located distal of the shielding gas discharge holes, or mounted between a portion of the contact tip and the diffuser. For example, attaching the contact tip to the diffuser can hold the gas lens 211 in place within the nozzle by clamping the gas lens between a portion of the contact tip and the end face of the diffuser. In an example embodiment, the screens 216, 218 and hub 220 are made from suitable metallic materials. However, the hub 220 and screens 216, 218 could be made from other appropriate materials suitable for exposure to the high temperatures at the distal end of the torch. For example, the hub could be made of an electrically-insulating material such as a ceramic.

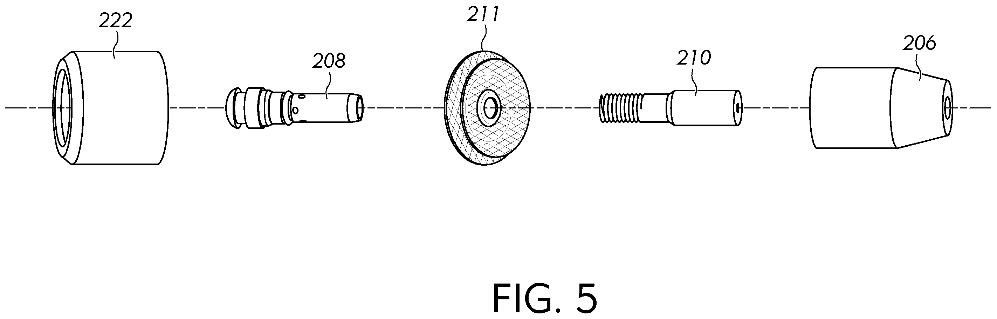

Figure 5 shows an exploded view of the distal end of an example torch that includes the shielding gas lens 211. The nozzle 206 can be attached to the torch's gooseneck via an insulator 222. As is known in the art, the metallic nozzle 206 (in particular the exposed outer surface of the nozzle) should be electrically insulated from the contact tip and the diffuser, which can be energized during welding. Located inside of the nozzle 206 are the diffuser 208, contact tip 210, and shielding gas lens 211. As noted above, the shielding gas lens 211 can be located at various positions within the nozzle downstream of the shielding gas discharge holes. For example, the shielding gas lens 211 could be mounted on the diffuser 208.

The shielding gas lens 211 is a consumable component of the torch that can be replaced from time to time, similar to the contact tip 210 and the diffuser 208. The shielding gas lens 211 is shown in the figures as a separate component from the contact tip 210 and the diffuser 208. However, the shielding gas lens 211 need not be a separate component from the diffuser 208 but could be directly attached to the diffuser so as to be replaceable therewith. For example, the diffuser 208 could have the gas lens 211 built into the diffuser to form a common consumable component of the torch.

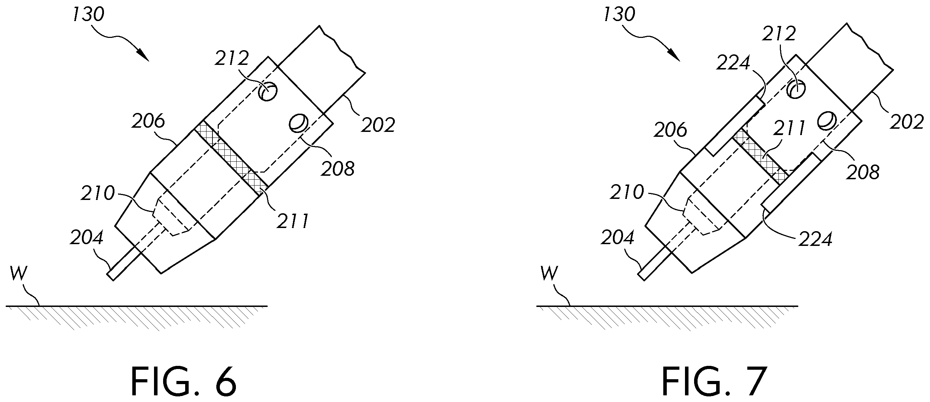

Figure 6 shows the distal portion of the welding torch 130 with the shielding gas lens 211 located between the diffuser 208 and a portion of the contact tip 210 that is distal of the diffuser. For example, the shielding gas lens 211 is clamped between the end face of the diffuser 208 and the portion of the contact tip 210 that is distal of the diffuser. The contact tip 210 can include a shank that is inserted (e.g., threaded) into the diffuser 208 and a shoulder that normally seats against the end face of the diffuser. The shoulder on the contact tip 210 can clamp the shielding gas lens 211 against the diffuser 208 as the contact tip is threaded into the diffuser. The central hub of the shielding gas lens 211 can be located between the shoulder of the contact tip 210 and the end face of the diffuser 208.

The outer surface of the nozzle 206 should be electrically insulated from the contact tip 210 and the diffuser 208, which can be energized during welding. The annular screen(s) of the shielding gas lens 211 extend radially outward from the diffuser 208 toward the nozzle 206 and across the air gap that normally exists between the diffuser/contact tip and the nozzle. The nozzle 206 is typically made of a metallic material. The annular screen(s) of the shielding gas lens 211 can also be made of a metallic material and be electrically conductive. To avoid energizing the nozzle 206 via the shielding gas lens 211, the shielding gas lens 211 and its annular screen(s) can be electrically isolated or insulated from the nozzle 206 (in particular from the outer surface of the nozzle which can come into contact with the workpiece or the operator) and/or be electrically insulated from the diffuser 208. For example, the central hub of the shielding gas lens 211 can electrically insulate the annular screen(s) of the lens from the diffuser 208. The central hub of the shielding gas lens 211 can be made from a nonmetallic material such as a ceramic that is electrically insulating and resistant to high temperatures. The central hub of the shielding gas lens 211 could also include an insulating layer or barrier between the hub and the diffuser or between the hub and the annular screen(s). An electrical insulating layer 224 can also be located radially between the annular screen(s) of the shielding gas lens 211 and the nozzle 206 (Fig. 7). In this case, the shielding gas lens 211 can have the same electrical potential as the diffuser 208 and contact tip 210, but it will be electrically insulated from the nozzle 206 and the outer surface of the nozzle, to prevent the gas lens from energizing the nozzle.

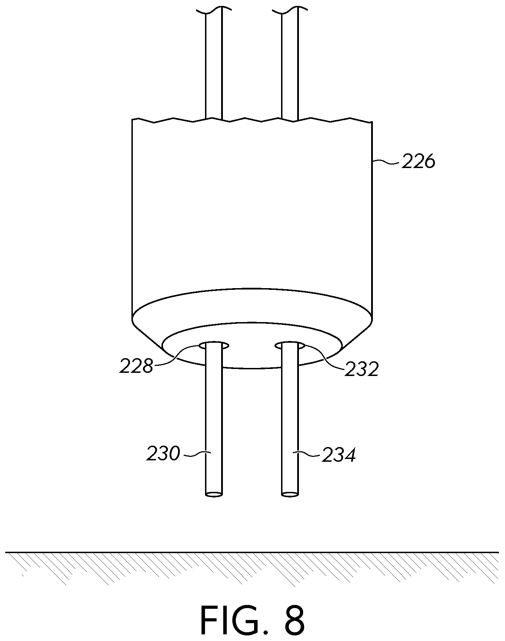

Figure 8 shows schematically a contact tip 226 for a dual wire welding operation. The use of a shielding gas lens in a dual wire welding operation can be beneficial because of the high deposition rate and molten puddle size and the need for adequate shielding gas coverage. The use of a shielding gas lens to provide a more laminar shielding gas flow in a dual wire welding operation can allow for lower shielding gas flow rates (CFH) during welding and provide reduced porosity, as compared to conventional dual wire welding operations. The contact tip 226 for a dual wire welding operation has a first bore and exit orifice 228 for a first wire electrode 230, and a second bore and exit orifice 232 for a second wire electrode 234. Welding current is simultaneously conducted to both wire electrodes 230, 234 through the contact tip 226 during the welding operation.

It should be evident that the disclosure of the present invention is by way of example and that various changes may be made by adding, modifying or eliminating details without departing from the scope of the present invention as defined in the appended claims.

## Claims

1. A welding or metal additive manufacturing torch (130), comprising:
- a nozzle (206);
- a shielding gas diffuser (208) located within the nozzle (206) and having a plurality of shielding gas discharge holes (212) spaced annularly around the shielding gas diffuser (208);
the torch (130) being **characterised by**:
- a contact tip (210) extending from the shielding gas diffuser (208) distal of the shielding gas discharge holes (212);
- an annular screen (216, 218) located distal of the shielding gas discharge holes (212), wherein the annular screen (216, 218) is electrically insulated from at least one of the shielding gas diffuser (208) and an outer surface of the nozzle (206), wherein the annular screen (216, 218) extends radially between the nozzle (206) and the shielding gas diffuser (208).

2. The welding or metal additive manufacturing torch (130) of claim 1, wherein the annular screen (216, 218) includes a central hub mounted on the shielding gas diffuser, wherein preferably the central hub electrically insulates the annular screen (216, 218) from the shielding gas diffuser.

3. The welding or metal additive manufacturing torch (130) of claim 1 or 2, wherein
- the annular screen (216, 218) is attached to the shielding gas diffuser.

4. The welding or metal additive manufacturing torch (130) of claim 1, further comprising a central hub attached to the annular screen (216, 218), wherein the central hub electrically insulates the annular screen (216, 218) from the shielding gas diffuser.

5. The welding or metal additive manufacturing torch (130) of claim 1, further comprising an electrical insulator located radially between the annular screen (216, 218) and the nozzle (206).

6. The welding or metal additive manufacturing torch (130) of claim 1, wherein the annular screen (216, 218) is formed of one of a plurality of metallic annular screens (216, 218) comprised within a shielding gas lens, wherein the plurality of metallic annular screens (216, 218) extend radially between the nozzle (206) and the shielding gas diffuser (208) and are located distal of the shielding gas discharge holes (212), wherein the plurality of metallic annular screens (216, 218) are electrically insulated from at least one of the shielding gas diffuser (208) and an outer surface of the nozzle (206).

7. The welding or metal additive manufacturing torch (130) of claim 6, wherein the shielding gas lens includes a central hub mounted on the shielding gas diffuser, wherein preferably the central hub electrically insulates the plurality of metallic annular screens (216, 218) from the shielding gas diffuser.

8. The welding or metal additive manufacturing torch (130) of claim 6 or 7, wherein
- the shielding gas lens is attached to the shielding gas diffuser.

9. The welding or metal additive manufacturing torch (130) of claim 6, 7 or 8, wherein the shielding gas lens includes a central hub attached to the plurality of metallic annular screens (216, 218), wherein the central hub electrically insulates the plurality of metallic annular screens (216, 218) from the shielding gas diffuser.

10. The welding or metal additive manufacturing torch (130) of any of the claims 6-9, further comprising an electrical insulator located radially between the plurality of metallic annular screens (216, 218) and the nozzle (206).

11. The welding or metal additive manufacturing torch (130) according to claim 1, wherein the contact tip (210) has a first exit orifice for a first wire electrode and a second exit orifice for second wire electrode.

12. The welding or metal additive manufacturing torch (130) of claim 11, wherein the annular screen (216, 218) includes a central hub mounted on the shielding gas diffuser, wherein preferably the central hub electrically insulates the annular screen (216, 218) from the shielding gas diffuser.

13. The welding or metal additive manufacturing torch (130) of claim 11 or 12, wherein
- the annular screen (216, 218) is attached to the shielding gas diffuser.

14. The welding or metal additive manufacturing torch (130) of claim 11, 12 or 13, further comprising a central hub attached to the annular screen (216, 218), wherein the central hub electrically insulates the annular screen (216, 218) from the shielding gas diffuser.

15. The welding or metal additive manufacturing torch (130) of any of the claims 11-14, further comprising an electrical insulator located radially between the annular screen (216, 218) and the nozzle (206).

## Patentansprüche

1. Brenner zum Schweißen oder zur additiven Metallfertigung (130), umfassend:
- eine Düse (206);
- einen Schutzgasdiffusor (208), der sich innerhalb der Düse (206) befindet und eine Mehrzahl von Schutzgasauslasslöchern (212) aufweist, die ringförmig um den Schutzgasdiffusor (208) herum beabstandet sind;
wobei der Brenner (130) **gekennzeichnet ist durch**:
- eine Kontaktspitze (210), die sich von dem Schutzgasdiffusor (208) distal zu den Schutzgasauslasslöchern (212) erstreckt;
- eine ringförmige Abschirmung (216, 218), die sich distal von den Schutzgasauslasslöchern (212) befindet, wobei die ringförmige Abschirmung (216, 218) von mindestens einem von dem Schutzgasdiffusor (208) und einer Außenfläche der Düse (206) elektrisch isoliert ist, wobei sich die ringförmige Abschirmung (216, 218) radial zwischen der Düse (206) und dem Schutzgasdiffusor (208) erstreckt.

2. Brenner zum Schweißen oder zur additiven Metallfertigung (130) nach Anspruch 1, wobei die ringförmige Abschirmung (216, 218) eine auf dem Schutzgasdiffusor montierte zentrale Nabe aufweist, wobei bevorzugt die zentrale Nabe die ringförmige Abschirmung (216, 218) elektrisch von dem Schutzgasdiffusor isoliert.

3. Brenner zum Schweißen oder zur additiven Metallfertigung (130) nach Anspruch 1 oder 2, wobei die ringförmige Abschirmung (216, 218) an dem Schutzgasdiffusor befestigt ist.

4. Brenner zum Schweißen oder zur additiven Metallfertigung (130) nach Anspruch 1, ferner umfassend ferner eine an der ringförmigen Abschirmung (216, 218) befestigte zentrale Nabe, wobei die zentrale Nabe die ringförmige Abschirmung (216, 218) elektrisch von dem Schutzgasdiffusor isoliert.

5. Brenner zum Schweißen oder zur additiven Metallfertigung (130) nach Anspruch 1, ferner umfassend einen elektrischen Isolator, der sich radial zwischen der ringförmigen Abschirmung (216, 218) und der Düse (206) befindet.

6. Brenner zum Schweißen oder zur additiven Metallfertigung (130) nach Anspruch 1, wobei die ringförmige Abschirmung (216, 218) aus einer von einer Mehrzahl von metallischen ringförmigen Abschirmungen (216, 218) gebildet ist, die in einer Schutzgaslinse umfasst sind, wobei die Mehrzahl von metallischen ringförmigen Abschirmungen (216, 218) sich radial zwischen der Düse (206) und dem Schutzgasdiffusor (208) erstrecken und sich distal von den Schutzgasauslasslöchern (212) befinden, wobei die Mehrzahl von metallischen ringförmigen Abschirmungen (216, 218) elektrisch von mindestens einem von dem Schutzgasdiffusor (208) und einer Außenfläche der Düse (206) isoliert sind.

7. Brenner zum Schweißen oder zur additiven Metallfertigung (130) nach Anspruch 6, wobei die Schutzgaslinse eine an dem Schutzgasdiffusor montierte zentrale Nabe aufweist, wobei bevorzugt die zentrale Nabe die Mehrzahl von metallischen ringförmigen Abschirmungen (216, 218) elektrisch von dem Schutzgasdiffusor isoliert.

8. Brenner zum Schweißen oder zur additiven Metallfertigung (130) nach Anspruch 6 oder 7, wobei die Schutzgaslinse an dem Schutzgasdiffusor befestigt ist.

9. Brenner zum Schweißen oder zur additiven Metallfertigung (130) nach Anspruch 6, 7 oder 8, wobei die Schutzgaslinse eine an der Mehrzahl von metallischen ringförmigen Abschirmungen (216, 218) befestigte zentrale Nabe aufweist, wobei die zentrale Nabe die Mehrzahl von metallischen ringförmigen Abschirmungen (216, 218) elektrisch von dem Schutzgasdiffusor isoliert.

10. Brenner zum Schweißen oder zur additiven Metallfertigung (130) nach einem der Ansprüche 6 bis 9, ferner umfassend einen elektrischen Isolator, der sich radial zwischen der Mehrzahl von metallischen ringförmigen Abschirmungen (216, 218) und der Düse (206) befindet.

11. Brenner zum Schweißen oder zur additiven Metallfertigung (130) nach Anspruch 1, wobei die Kontaktspitze (210) eine erste Austrittsöffnung für eine erste Drahtelektrode und eine zweite Austrittsöffnung für eine zweite Drahtelektrode aufweist.

12. Brenner zum Schweißen oder zur additiven Metallfertigung (130) nach Anspruch 11, wobei die ringförmige Abschirmung (216, 218) eine an dem Schutzgasdiffusor montierte zentrale Nabe aufweist, wobei bevorzugt die zentrale Nabe die ringförmige Abschirmung (216, 218) elektrisch von dem Schutzgasdiffusor isoliert.

13. Brenner zum Schweißen oder zur additiven Metallfertigung (130) nach Anspruch 11 oder 12, wobei die ringförmige Abschirmung (216, 218) an dem Schutzgasdiffusor befestigt ist.

14. Brenner zum Schweißen oder zur additiven Metallfertigung (130) nach Anspruch 11, 12 oder 13, ferner umfassend eine an der ringförmigen Abschirmung (216, 218) befestigte zentrale Nabe, wobei die zentrale Nabe die ringförmige Abschirmung (216, 218) elektrisch vom Schutzgasdiffusor isoliert.

15. Brenner zum Schweißen oder zur additiven Metallfertigung (130) nach einem der Ansprüche 11 bis 14, ferner umfassend einen elektrischen Isolator, der sich radial zwischen der ringförmigen Abschirmung (216, 218) und der Düse (206) befindet.

## Revendications

1. Torche (130) de soudage ou de fabrication additive métallique, comprenant :
- une buse (206) ;
- un diffuseur (208) de gaz de protection situé à l'intérieur de la buse (206) et présentant une pluralité de trous (212) de décharge de gaz de protection espacés de manière annulaire autour du diffuseur (208) de gaz de protection ;
la torche (130) étant **caractérisée par** :
- une pointe de contact s'étendant depuis le diffuseur (208) de gaz de protection distal par rapport aux trous (212) de décharge de gaz de protection ;
- un écran annulaire (216, 218) situé distal par rapport aux trous (212) de décharge de gaz de protection, l'écran annulaire (216, 218) étant isolé électriquement d'au moins l'un parmi le diffuseur (208) de gaz de protection et une surface externe de la buse (206), l'écran annulaire (216, 218) s'étendant radialement entre la buse (206) et le diffuseur (208) de gaz de protection.

2. Torche (130) de soudage ou de fabrication additive métallique selon la revendication 1, dans laquelle l'écran annulaire (216, 218) comprend un moyeu central monté sur le diffuseur de gaz de protection, dans laquelle de préférence le moyeu central isole électriquement l'écran annulaire (216, 218) du diffuseur de gaz de protection.

3. Torche (130) de soudage ou de fabrication additive métallique selon la revendication 1 ou 2, dans laquelle
- l'écran annulaire (216, 218) est fixé au diffuseur de gaz de protection.

4. Torche (130) de soudage ou de fabrication additive métallique selon la revendication 1, comprenant en outre un moyeu central fixé à l'écran annulaire (216, 218), dans laquelle le moyeu central isole électriquement l'écran annulaire (216, 218) du diffuseur de gaz de protection.

5. Torche (130) de soudage ou de fabrication additive métallique selon la revendication 1, comprenant en outre un isolant électrique situé radialement entre l'écran annulaire (216, 218) et la buse (206).

6. Torche (130) de soudage ou de fabrication additive métallique selon la revendication 1, dans laquelle l'écran annulaire (216, 218) est formé d'un parmi une pluralité d'écrans annulaires (216, 218) métalliques compris dans une lentille de gaz de protection, dans laquelle la pluralité d'écrans annulaires (216, 218) métalliques s'étendent radialement entre la buse (206) et le diffuseur (208) de gaz de protection et sont situés distaux par rapport aux trous (212) de décharge de gaz de protection, dans laquelle la pluralité d'écrans annulaires (216, 218) métalliques sont isolés électriquement d'au moins l'un parmi le diffuseur (208) de gaz de protection et une surface externe de la buse (206).

7. Torche (130) de soudage ou de fabrication additive métallique selon la revendication 6, dans laquelle la lentille de gaz de protection comprend un moyeu central monté sur le diffuseur de gaz de protection, dans laquelle, de préférence, le moyeu central isole électriquement la pluralité d'écrans annulaires (216, 218) métalliques du diffuseur de gaz de protection.

8. Torche (130) de soudage ou de fabrication additive métallique selon la revendication 6 ou 7, dans laquelle
- la lentille de gaz de protection est fixée au diffuseur de gaz de protection.

9. Torche (130) de soudage ou de fabrication additive métallique selon la revendication 6, 7 ou 8, dans laquelle la lentille de gaz de protection comprend un moyeu central fixé à la pluralité d'écrans annulaires (216, 218) métalliques, dans laquelle le moyeu central isole électriquement la pluralité d'écrans annulaires (216, 218) métalliques du diffuseur de gaz de protection.

10. Torche (130) de soudage ou de fabrication additive métallique selon l'une quelconque des revendications 6 à 9, comprenant en outre un isolant électrique situé radialement entre la pluralité d'écrans annulaires (216, 218) métalliques et la buse (206).

11. Torche (130) de soudage ou de fabrication additive métallique selon la revendication 1, dans laquelle la pointe de contact (210) présente un premier orifice de sortie pour un premier fil-électrode et un second orifice de sortie pour un second fil-électrode.

12. Torche (130) de soudage ou de fabrication additive métallique selon la revendication 11, dans laquelle l'écran annulaire (216, 218) comprend un moyeu central monté sur le diffuseur de gaz de protection, dans laquelle de préférence le moyeu central isole électriquement l'écran annulaire (216, 218) du diffuseur de gaz de protection.

13. Torche (130) de soudage ou de fabrication additive métallique selon la revendication 11 ou 12, dans laquelle
- l'écran annulaire (216, 218) est fixé au diffuseur de gaz de protection.

14. Torche (130) de soudage ou de fabrication additive métallique selon la revendication 11, 12 ou 13, comprenant en outre un moyeu central fixé à l'écran annulaire (216, 218), dans laquelle le moyeu central isole électriquement l'écran annulaire (216, 218) du diffuseur de gaz de protection.

15. Torche (130) de soudage ou de fabrication additive métallique selon l'une quelconque des revendications 11 à 14, comprenant en outre un isolant électrique situé radialement entre l'écran annulaire (216, 218) et la buse (206).
